# EUROPEAN PATENT SPECIFICATION

(11) **EP 3 088 234 B1**
(45) Date of publication and mention of the grant of the patent: **26.02.2020**
(21) Application number: 16167127.6
(22) Date of filing: 26.04.2016
(51) Int. Cl.: B60K 37/02, G01D 13/26

(54) **DISPLAY DEVICE OF VEHICLE**
ANZEIGEVORRICHTUNG EINES FAHRZEUGS
DISPOSITIF D'AFFICHAGE DE VÉHICULE

(30) Priority: 27.04.2015 JP 2015090606
(43) Date of publication of application: 02.11.2016
(73) Proprietor: KAWASAKI JUKOGYO KABUSHIKI KAISHA, Kobe shi, Hyogo 650-8670 (JP)
(72) Inventor: Oyanagi, Juichi, Hyogo, 673-8666 (JP); Kouchi, Kaoru, Hyogo, 673-8666 (JP)
(74) Representative: Witte, Weller & Partner Patentanwälte mbB

(56) References cited:
- EP-A1- 2 166 315
- WO-A1-2009/111391
- DE-A1-102005 017 666
- DE-A1-102010 010 444
- JP-A- 2003 065 806
- US-A1- 2005 154 502

## Description

### BACKGROUND OF THE INVENTION

### FIELD OF THE INVENTION

The present invention relates to a display device of a vehicle.

### DESCRIPTION OF THE RELATED ART

In a vehicle incorporating a manual transmission, a rider performs shift change depending on a traveling speed, a traveling state, etc..

In some cases, the vehicle is provided with a shift-up indicator which allows the rider to recognize a timing at which the rider performs the shift-up operation of the transmission. When a specified motor rotational speed is detected, the shift-up indicator turns ON a shift-up command lamp so that the rider can recognize the timing of the shift-up operation (e.g., see Japanese Laid-Open Patent Application Publication No. Hei. 4-362367).

In the vehicle, a region in which the indicator can be placed is limited. Since the shift-up indicator has an importance lower than those of other indicators, the shift-up command lamp is not easily noted by the rider. Under the situation, it is difficult for the rider to instantly see and recognize the timing of the shift-up operation of the transmission.

If the rider can instantly recognize changes in the states of the vehicle as well as the timing of the shift-up operation, this would be convenient to the rider.

Patent document WO 2009/111391 A1 discloses an analog-style gauge for displaying the value of a parameter measured or sensed by a remote sensor. The gauge comprises an actuator having a selectively rotatable shaft and a pointer fixedly attached to the actuator shaft and capable of being internally illuminated by light directed into the pointer. A light source is disposed to direct light of at least two colors unto the pointer. Control circuitry is operably connected to the actuator, the light source and a remote sensor. The control circuitry rotates the actuator shaft within a range of motion in response to signals received from the remote sensor indicative of changes in the value of the sensed parameter.

Patent document EP 2 166 315 A1 discloses an indicating instrument with an instrument dial and an illuminated and pivoted indicator. A critical operation condition of a motor vehicle is represented with a color change of the indicator. The color change of the indicator is effected by a speed limit, which is detected by an image recording system.

Further, patent document JP 2003 065806 discloses a measuring instrument unit to inform a driver of that an engine speed reaches to a prescribed value, without arranging an exclusive indicator within a display panel.

Patent document DE 10 2005 017666 A1 discloses an indicating instrument with a lighting device producing different colored light and flashing illumination. A frequency of flashing is changeable depending on measurement that is to be represented, where the frequency change and a color change of the lighting are producible on reachinp a threshold value.

Further, patent document US 2005/154502 A1 discloses a display for a vehicle comprises an indicator such as a pointer or needle. The display is configured such that the position of the indicator is responsive to, an thus indicative of, the vehicle speed and the appearance of the indicator is responsive to, and thus indicative of, the engine speed.

### SUMMARY OF THE INVENTION

In view of the above, an object of the present invention is to provide a display device of a vehicle, which can allow the rider to easily recognize changes in a motor rotational speed, etc.,

According to the present invention, a display device of a vehicle is presented as defined in claim 1.

In accordance with this configuration, when the threshold determiner unit determines that the rotational speed of the motor has exceeded the threshold, the display configuration of the indicator needle member which should be fundamentally checked by the rider while accelerating or decelerating the vehicle, is changed. Thereby, without shifting the rider's eyes directed to the indicator needle member, to other locations, namely, while keeping a state in which the rider's eyes are directed to the indicator needle member, the rider can recognize both of the change in the rotational speed of the motor and the timing of the shift-up operation of the transmission. This allows the rider to instantly recognize the timing of the shift-up operation of the transmission.

The rotational speed display unit may include a gear position display section which displays a gear position of a transmission of the vehicle.

In accordance with this configuration, even when the threshold determiner unit determines that the rotational speed of the motor has exceeded the threshold, the display configuration of the tip end portion of the indicator needle member, which points the scale marking, is unchanged. In other words, the display configuration of the tip end portion of the indicator needle member remains unchanged, before the rotational speed exceeds the threshold and after the rotational speed has exceeded the threshold. Therefore, the rider can easily recognize the rotational speed of the motor, compared to a case where the display configuration of the whole of the indicator needle member is changed.

The threshold may includes a first threshold and a second threshold set to a value which is greater than a value of the first threshold. The display configuration control unit may changes the display color of the indicator needle member, when the threshold determiner unit determines that the rotational speed has exceeded the first threshold. The display configuration control unit may changes the display configuration of the indicator needle member from ON-state to blinking-state, when the threshold determiner unit determines that the rotational speed has exceeded the second threshold.

If the rotational speed of the motor exceeds the second threshold, after the threshold determiner unit determined that the rotational speed of the motor exceeded the first threshold and the rider was urged to perform the shift-up operation of the transmission by changing the display configuration of the indicator needle member, but the rider did not perform the shift-up operation of the transmission, the display configuration of the indicator needle member is further changed. Therefore, the display configuration of the indicator needle member is changed in a stepwise manner as the rotational speed increases. In this way, the rider is strongly urged to perform the shift-up operation of the transmission.

The first display configuration may be such that a first color is displayed, the first color being different from a basic color displayed before the threshold determiner unit determines that the engine speed has exceeded the first threshold, and the second display configuration may be such that the basic color and the first color are repeatedly displayed in a cyclic manner.

In accordance with this configuration, the rider can easily recognize the change in the rotational speed of the motor, compared to a case where the display configuration of the indicator needle member is unchanged when the rotational speed of the motor becomes high.

In a case where the indicator needle member emits the light by the light source to change the display configuration, the display configuration of the indicator needle member can be changed in a stepwise manner as the rotational speed of the motor increases, without increasing the number of the light sources.

The threshold may be chosen and set.

In accordance with this configuration, the threshold of the rotational speed of the motor can be chosen and set according to the rider's preference. This is convenient to the rider.

The rotational speed display unit may includes a shift-up notification section which notifies a rider of a timing of the shift-up operation of the transmission, independently of the indicator needle member, wherein the shift-up notification section is placed to be closer to the gear position display section than the scale markings is, and the display configuration control unit may change a display configuration of the shift-up notification section in synchronization with a change in the display configuration of the indicator needle member, when the threshold determiner unit determines that the rotational speed has exceeded the threshold.

In accordance with this configuration, the change in the display configuration of the indicator needle member is synchronized with the change in the display configuration of the shit-up notification section. Since the display configuration of the shit-up notification section is changed in addition to the change in the display configuration of the indicator needle member, the rider can more easily recognize the timing of the shift-up operation of the transmission.

The rotational speed display unit may includes a plurality of light sources provided on a back side of the dial plate section, the plurality of the light sources include a first light source which emits light with a first color, and a second light source which emits light with a second color different from the first color, and wherein an amount of the light emitted from the second light source is set to be greater than that of the first light source.

The rotational speed display unit may includes a plurality of light sources provided on a back side of the dial plate section, wherein the indicator needle member includes a portion which is semi-transparent even in the state in which the light source is emitting light.

The above and further objects, features and advantages of the present invention will more fully be apparent from the following detailed description of preferred embodiment with accompanying drawings.

### BRIEF DESCRIPTION OF THE DRAWINGS

Fig. 1 is a schematic plan view of a display device of a vehicle according to an embodiment.
Fig. 2 is a cross-sectional view taken along line II-II of Fig. 1.
Fig. 3 is a block diagram of the display device of Fig. 1.
Fig. 4 is a flowchart showing a control procedure of the display device of Fig. 1.
Fig. 5A is a schematic plan view of a rotational speed display unit, showing a state formed before an engine speed exceeds a first threshold.
Fig. 5B is a schematic plan view of the rotational speed display unit, showing a state formed after the engine speed has exceeded the first threshold and before the engine speed exceeds a second threshold.
Fig. 5C is a schematic plan view of the rotational speed display unit₁ showing a state in which the engine speed has exceeded the second threshold.

### DETAILED DESCRIPTION OF THE EMBODIMENTS

Hereinafter, the embodiment of the present invention will be described with reference to the drawings. Throughout the drawings, the same or corresponding components are designated by the same reference symbols, and will not be described repeatedly. As an exemplary vehicle, a motorcycle including a manual transmission and an engine as a motor will be described.

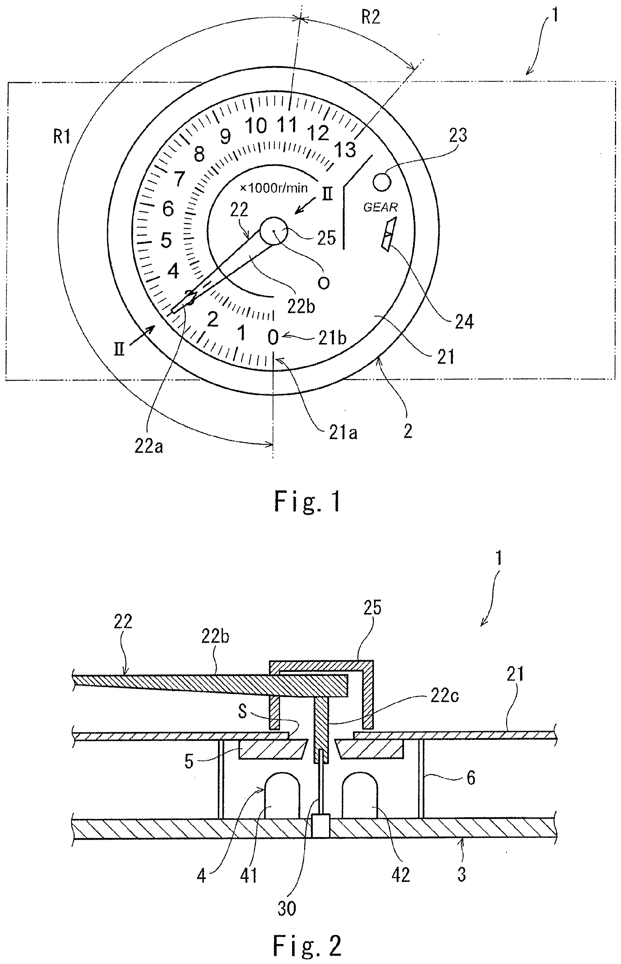

Fig. 1 is a schematic plan view of a display device 1 of the motorcycle according to the embodiment. Referring now to Fig. 1, the display device 1 includes a rotational speed display unit 2. The rotational speed display unit 2 includes a dial plate section 21, an indicator needle member 22, a shift-up notification section 23, and a gear position display section 24. The dial plate section 21 is made of a resin material and has a substantially disc shape. The dial plate section 21 includes scale markings 21a arranged in a circular-arc shape. In the present embodiment, the dial plate section 21 includes numbers 21b arranged in the circular-arc shape together with the scale markings 21a, to correspond to the scale markings 21a, respectively. The scale markings 21a are arranged in the circular-arc shape on both sides of the numbers 21b, in the radial direction of the rotational speed display unit 2.

In the present embodiment, the scale markings 21a and the numbers 21b of the dial plate section 21 are provided to display the engine speed (engine rotational speed) which is one of information indicating the states of the motorcycle. Specifically, the display device 1 includes a tachometer as the rotational speed display unit 2. A rider performs a shift change operation such as a shift-up operation or a shift-down operation, according to the value of the engine speed displayed on the tachometer 2. The display device 1 includes display units (e.g., a speed meter, a distance meter, a fuel meter, etc.) different from the tachometer 2, although these display units are not shown. The tachometer 2 is sometimes placed at a position which can be easily noted by the rider, in the display device 1 so that the rider can easily see and recognize the engine speed of the tachometer 2. In the present embodiment, the tachometer 2 is placed in a region which is close to the center of the display device 1, and has an occupation area greater than those of other display units.

The above-described states of the motorcycle include values detected by sensors mounted in the motorcycle, during traveling of the motorcycle. Also, the changes in the states of the motorcycle (vehicle) are defined as changes in the states of the motorcycle (vehicle), which take place as a result of the rider's operation during traveling of the motorcycle (vehicle).

A dial plate section light source such as a light emitting diode (LED) provided on the back side of the scale markings 21a and the numbers 21b of the dial plate section 21 is turned ON, and thus the scale markings 21a the numbers 21b of the dial plate section 21 are displayed as emitting light. In the present embodiment, of the scale markings 21a and the numbers 21b of the dial plate section 21, a color of a part arranged in a non-high rotational speed range R1 is a white color, while a color of a part arranged in a high rotational speed range R2 is different from the color of the part arranged in the non-high rotational speed range R1, and is a red color in the present embodiment. The high rotational speed range R2 is a range indicating that the engine speed is high, namely, a red zone. A color (background color) of a part which is except the scale markings 21a and the numbers 21b, of the dial plate section 21, is a black color.

The indicator needle member 22 is a rod-like member extending radially outward from a center O of the dial plate section 21, namely, the center O of the circular-arc shape along which the scale markings 21a are arranged. The indicator needle member 22 has a taper shape in which its width is decreased from a base portion toward a tip end portion 22a. The indicator needle member 22 is made of a resin material which is semi-transparent and colorless. The indicator needle member 22 is movable with respect to the dial plate section 21, according to the engine speed. The tip end portion 22a of the indicator needle member 22 points the scale marking 21a corresponding to the engine speed. The outer surface of the tip end portion 22a of the indicator needle member 22 is painted in a fixed color, for example, the white color in the present embodiment. In this way, the tip end portion 22a of the indicator needle member 22 has a non-transparent color.

In contrast, of the remaining portion of the indicator needle member 22, which is different from the tip end portion 22a, a region which overlaps with the scale marking 21a which is radially inward relative to the number 21b, when viewed from above, is semi-transparent or transparent so that the rider can see the scale marking 21a. Hereinafter, a portion of the indicator needle member 22, which is except the tip end portion 22a, will be referred to as a semi-transparent portion 22b. In brief, the indicator needle member 22 includes the non-transparent portion 22a and the semi-transparent portion 22b. As will be described later, the semi-transparent portion 22b of the indicator needle member 22 emits light when an indicator needle member light source 4 provided on the back side of the dial plate section 21 is turned ON.

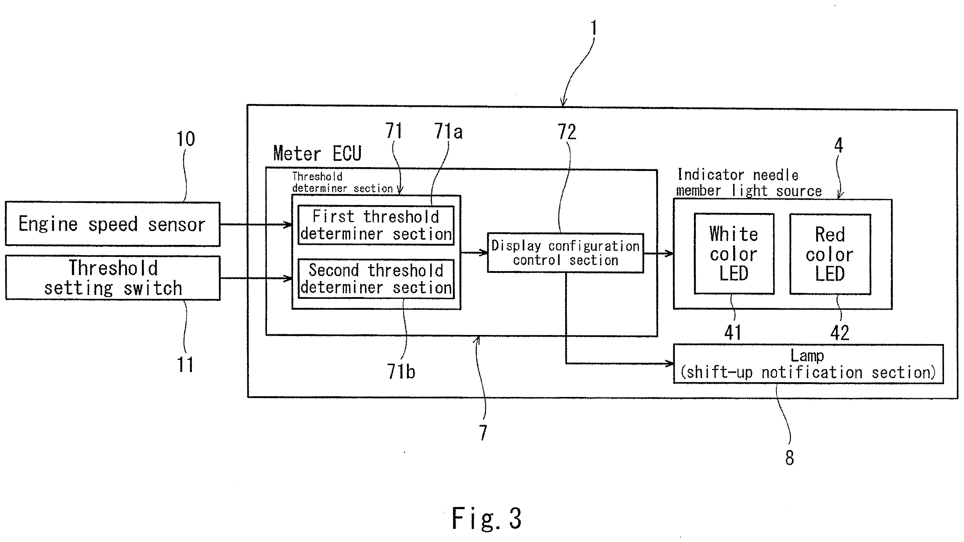

The shift-up notification section 23 is placed to be apart from the center O of the dial plate section 21, specifically, in a right-side region of the dial plate section 21. The shift-up notification section 23 is placed to be closer to the gear position display section 24 than the dial plate section 21 is. When the indicator needle member 22 points the scale marking indicating a specified engine speed, a lamp 8 (see Fig. 3) provided on the back side of the dial plate section 21 is turned ON, and thereby the shift-up notification section 23 notifies the rider of the timing of the shift-up operation of the transmission. Alternatively, the lamp 8 may blink so that the rider can know the timing of the shift-up operation of the transmission. The shift-up notification section 23 has an area smaller than that of the indicator needle member 22.

The gear position display section 24 which displays the gear position of the transmission is placed below the shift-up notification section 23. The gear position display section 24 is controlled by a meter ECU 7 (see Fig. 3) to display the gear position of the transmission using a numeric value in a digital format, based on a signal received from the gear position sensor (not shown) so that the rider can know a present gear position.

Fig. 2 is a cross-sectional view taken along line II-II of Fig. 1. As shown in Fig. 2, the display device 1 includes a circuit board 3 on the back side of the dial plate section 21. The circuit board 3 is provided with a rotary shaft 30 to which the indicator needle member 22 is fixed. The rotary shaft 30 is placed to overlap with the center O of the dial plate section 21, when viewed from above. The tip end of the rotary shaft 30 extends to a location which is in the vicinity of the back surface of the dial plate section 21. The indicator needle member 22 is provided with a shaft 22c extending downward from the base portion of the indicator needle member 22. The shaft 22c extends through an opening S provided in the center O of the dial plate section 21. The shaft 22c is fixed to the rotary shaft 30 by press-in. After the shaft 22c is fixed to the rotary shaft 30, a lid member 25 of a substantially cylindrical shape is placed over the base portion of the indicator needle member 22. In this way, the opening S of the dial plate section 21, and the base portion of the indicator needle member 22 are covered by the lid member 25.

The rotary shaft 30 is connected to an electric motor (not shown) via a gear. The meter ECU 7 (see Fig. 3) drives the electric motor, based on a signal received from an engine speed sensor 10. Driving power generated in the electric motor is transmitted to the rotary shaft 30. Thereby, the rotary shaft 30 to which the shaft 22c is fixed rotates, and hence the indicator needle member 22 rotates around the center O of the dial plate section 21 and is angularly displaced. In the above-described manner, the indicator needle member 22 moves with respect to the dial plate section 21 in response to the change in the state of the motorcycle, specifically, the increase/decrease in the engine speed, and changes its angular position. More specifically, the indicator needle member 22 moves among the scale markings 21a provided on the dial plate section 21, in response to the increase/decrease in the engine speed. The rider sees and recognizes the scale marking 21a pointed by the indicator needle member 22 which has moved with respect to the dial plate section 21. In this way, the rider can check the engine speed during traveling of the motorcycle.

A plurality of indicator needle member light sources 4 which cause the indicator needle member 22 to emit the light are mounted on the circuit board 3. The plurality of indicator needle member light sources 4 include a first light source 41, and a second light source 42 which emits the light of a color different from that of the first light source 41. In the present embodiment, the first light source 41 is a white color LED, while the second light source 42 is a red color LED. The lighting operations of the plurality of indicator needle member light sources 4 are controlled by the meter ECU 7 (see Fig. 3). A light guiding plate 5 is provided on the back surface of the dial plate section 21, and located above the plurality of indicator needle member light sources 4. Thus, the light guiding plate 5 is placed between the indicator needle member 22 and the plurality of indicator needle member light sources 4, in the thickness direction of the display device 1. The light guiding plate 5 is made of a transparent resin material. Reflecting walls 6 are placed in a location that is lateral relative to the plurality of indicator needle member light sources 4 to surround the indicator needle member light sources 4, respectively.

When the first light source 41 (or the second light source 42) is turned ON, the light is directly incident on the light guiding plate 5. Also, the light is reflected on the reflecting wall 6 and is incident on the light guiding plate 5. After that, the light emitted by the ON of the first light source 41 is guided from the light guiding plate 5 to the base portion of the indicator needle member 22 through the opening S of the dial plate section 21. In the present embodiment, the lid member 25 is made of a black resin material, and serves to block light to prevent the leakage of a part of the light guided to the base portion of the indicator needle member 22, to an outside region. Then, the light guided to the base portion of the indicator needle member 22 travels through the semi-transparent portion 22b toward the tip end of the indicator needle member 22 having the taper shape in which its width is decreased in the radial direction of the dial plate section 21.

Thereby, the semi-transparent portion 22b except the tip end portion 22a which is painted as non-transparent, of the indicator needle member 22 emits the light of a basic color or a first color, by the ON of the first light source 41 or the second light source 42. The term "basic color" refers to a color emitted from the indicator needle member 22, by the ON of the first light source (white color LED) 41, and is a white color in the present embodiment. The term "first color" refers to a color emitted from the indicator needle member 22, by the ON of the second light source (red color LED) 42, and is a red color in the present embodiment. Thus, the basic color or the first color of the indicator needle member 22 is preferably a display color which is different in tone or brightness from the background color (black in the present embodiment) of the dial plate section 21, and provides a contrast with respect to the background color.

The amount of the light emitted from each of the first light source 41 and the second light source 42 is adjusted so that the light emitted from the semi-transparent portion 22b of indicator needle member 22 has a brightness for allowing the rider to see and recognize the dial plate section 21 via the semi-transparent portion 22b . In other words, the indicator needle member 22 has a portion which becomes semi-transparent when the indicator needle member 22 emits the light. The amount of the light emitted from the second light source 42 is set to be greater than that of the first light source 41. Note that the degree of transparency of the indicator needle member 22, which occurs when the first or second light 41, 42 is ON is slightly lower than that which occurs when the first or second light 41, 42 is OFF.

Fig. 3 is a block diagram of the display device 1 of Fig. 1. As shown in Fig. 3, the display device 1 further includes the meter ECU 7 which controls the lighting operations of the plurality of indicator needle member light sources 4. The meter ECU 7 includes the above-described circuit board 3 on which the plurality of indicator needle member light sources 4 are mounted. In the present embodiment, in addition, the meter ECU 7 includes a threshold determiner section 71 and a display configuration control section 72. The engine speed sensor 10 is connected to the threshold determiner section 71. The threshold determiner section 71 receives the signal from the engine speed sensor 10. The threshold determiner section 71 has a function of a threshold determiner unit which determines whether or not the engine speed has exceeded a threshold which is a rough indication of the timing of the shift-up operation of the transmission. The threshold can be chosen and set according to the rider's preference. For example, the rider operates a threshold setting switch 11 attached on the display device 1 to choose the engine speed displayed on a screen of the rotational speed display unit 2, or the like, and causes the chosen engine speed to be stored in the threshold determiner section 71.

In the present embodiment, the threshold includes a first threshold, and a second threshold set to a value greater than the value of the first threshold. The first threshold is defined as the engine speed which is the rough indication of the timing of the shift-up operation of the transmission. In the present embodiment, the first threshold is set to a value in a range of 7000 to 9000r/min (e.g., 8000r/min). The second threshold is defined as an engine speed which is a rough indication which urges the rider to perform the shift-up operation of the transmission, if the rider does not perform the shift-up operation of the transmission, after the threshold determiner section 71 determined that the engine speed exceeded the first threshold. In the present embodiment, the second threshold is pre-set to a value in a range of 9000 to 11000r/min (e.g., 10000r/min). In the above-described manner, the first threshold and the second threshold are set to desired values, respectively, by the rider's operation of the threshold setting switch 11.

In the present embodiment, the threshold determiner section 71 includes a first threshold determiner section 71a corresponding to the first threshold, which determines whether or not the engine speed has exceeded the first threshold, and a second threshold determiner section 71b corresponding to the second threshold, which determines whether or not the engine speed has exceeded the second threshold.

The display configuration control section 72 causes the indicator needle member light source 4 to emit the light and the lamp 8 to be turned ON, based on the signal received from the threshold determiner section 71. The lamp 8 is used as a light source which causes the shift-up notification section 23 to display information. The brightness of the lamp 8, for example, the amount of the light emitted from the lamp 8, is set to be different from that of the indicator needle member light source 4. Thus, the display configuration control section 72 has a function of a display configuration control unit which controls the display configuration (the display color in the present embodiment) of the indicator needle member 22 and the display configuration (ON or OFF of the lamp 8, in the present embodiment) of the shift-up notification section 23, based on the signal from the threshold determiner section 71.

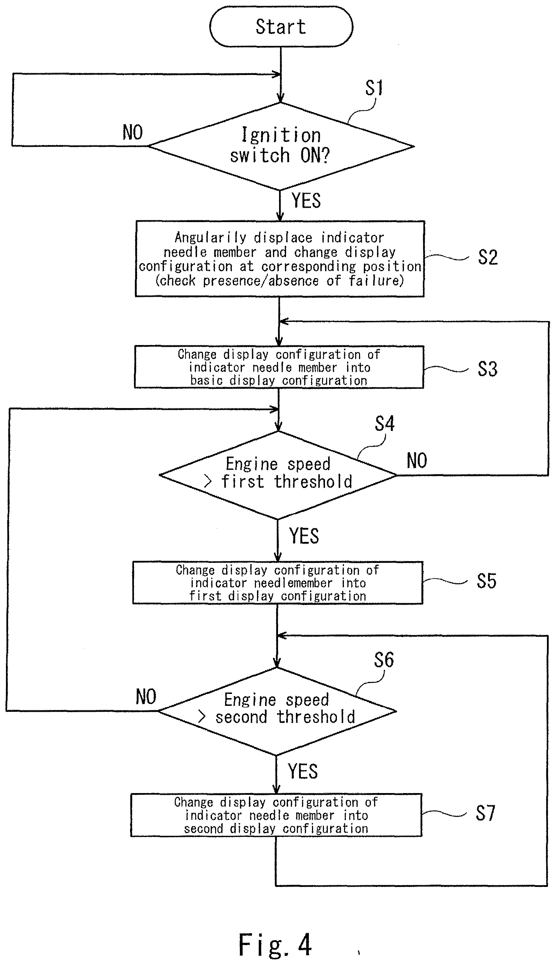

Fig. 4 is a flowchart showing a control procedure of the display device 1 of Fig. 1. Hereinafter, the control for the lighting operations of the indicator needle member light sources 4, which is performed by the meter ECU 7, will be described with reference to the flowchart of Fig. 4. The display configuration in which the semi-transparent portion 22b of the indicator needle member 22 emits the light of the basic color (white color in the present embodiment) by the ON of the first light source (white color LED) 41 will be referred to as a "basic display configuration". The display configuration in which the semi-transparent portion 22b of the indicator needle member 22 emits the light of the first color (red color in the present embodiment) by the ON of the second light source (red color LED) 42 will be referred to as a "first display configuration". The display configuration in which the semi-transparent portion 22b of the indicator needle member 22 emits the light of the basic color (white color) and the first color (red color) repeatedly in a cyclic manner by the ON of the first light source (white color LED) 41 and the ON of the second light source (red color LED) 42, which take place alternately, will be referred to as a "second display configuration".

Initially, the meter ECU 7 determines whether or not an ignition switch has been turned ON by the rider (step S1). When the meter ECU 7 determines that the ignition switch has been turned ON (YES in step S1), the meter ECU 7 causes the indicator needle member 22 to be angularly displaced in the basic display configuration, irrespective of the engine speed. When the indicator needle member 22 has reached a predetermined angular position corresponding to the engine speed set as the first threshold, the meter ECU 7 changes the display configuration of the indicator needle member 22 from the basic display configuration into the first display configuration. Thereafter, when the indicator needle member 22 has reached a predetermined angular position corresponding to the engine speed set as the second threshold, the meter ECU 7 changes the display configuration of the indicator needle member 22 from the first display configuration into the second display configuration (step S2). In this way, before the indicator needle member 22 performs the operation corresponding to the engine speed, the indicator needle member 22 performs a simulated operation.

Then, the display configuration control section 72 causes the semi-transparent portion 22b of the indicator needle member 22 to emit the light in the basic display configuration (step S3). Then, the first threshold determiner section 71a determines whether or not the engine speed has exceeded the predetermined first threshold (step S4). When the first threshold determiner section 71a determines that the engine speed has not exceeded (is lower than) the predetermined first threshold in step S4 (NO in step S4), the meter ECU 7 returns to step S3, and maintains the basic display configuration of the semi-transparent portion 22b of the indicator needle member 22.

On the other hand, when the first threshold determiner section 71a determines that the engine speed has exceeded the predetermined first threshold in step S4 (YES in step S4), the display configuration control section 72 turns OFF the white color LED 41, and causes the red color LED which is the second light source 42 to be turned ON to change the display configuration of the indicator needle member 22 from the basic display configuration into the first display configuration (step S5). In the above-described manner, the display configuration of the indicator needle member 22 which is seen by the rider is changed from the basic display configuration into the first display configuration, when the threshold determiner section 7 determines that the engine speed has exceeded the first threshold. Since the display configuration of the indicator needle member 22 is changed independently of the angular position of the indicator needle member 22, the rider is urged to perform the shift-up operation of the transmission. The phrase "the display configuration of the indicator needle member 22 is changed" means that what the indicator needle member 22 looks like to the rider is changed. Specifically, the phrase "the display configuration of the indicator needle member 22 is changed" means that the display color (color) of the indicator needle member 22 (the semi-transparent portion 22b of the indicator needle member 22) is changed.

Thereafter, the second threshold determiner section 71b determines whether or not the engine speed has exceeded the predetermined second threshold (step S6). When the second threshold determiner section 71b determines that the engine speed is lower than the predetermined second threshold in step S6 (NO in step S6), the meter ECU 7 returns to step S4. The display configuration control section 72 continues to cause the red color LED 42 to be ON, and urges the rider to perform the shift-up operation in the state in which the first display configuration of the indicator needle member 22 is maintained, until the first determiner section 71a determines that the engine speed is lower than the first threshold.

On the other hand, when the second threshold determiner section 71b determines that the engine speed has exceeded the predetermined second threshold in step S6 (YES in step S6), the display configuration control section 72 changes the display configuration of the indicator needle member 22 from the first display configuration into the second display configuration (step S7) to strongly urge the rider to perform the shift-up operation of the transmission. Then, the meter ECU 7 repeats the step S7, until the second threshold determiner section 71b determines that the engine speed is lower than the second threshold, and the meter ECU 7 returns to step S4.

When the meter ECU 7 returns to step S4 and the first threshold determiner section 71a determines that the engine speed is lower than the first threshold in step S4, the display configuration control section 72 changes the display configuration of the indicator needle member 22 back into the basic display configuration. Thereafter, the following steps are repeated, in order to allow the rider to recognize the timing of the shift-up operation of the transmission. When the first threshold determiner section 71a determines that the engine speed has exceeded the first threshold, the display configuration control section 72 changes the display configuration of the indicator needle member 22 into the first display configuration, while when the second threshold determiner section 71b determines that the engine speed has exceeded the second threshold, the display configuration control section 72 changes the display configuration of the indicator needle member 22 into the second display configuration. In the above-described manner, the meter ECU 7 controls the lighting operations of the indicator needle member light sources 4 by repeating step S3 to step S7 so that the rider can recognize the timing of the shift-up operation of the transmission, until the ignition switch is turned OFF by the rider. If the rider turns OFF the ignition switch while the steps of the flowchart of Fig. 4 are performed, the meter ECU 7 terminates the control for the lighting operations of the indicator needle member light sources 4.

**Table 1**

| | Engine speed R | Display configuration of indicator needle member | Shift-up notification section |
|---|---|---|---|
| (1) | R ≦ 1st threshold | Emit light of basic color (white color) | OFF |
| (2) | 1st threshold < R ≦ 2nd threshold | Emit light of first color (red color) | ON |
| (3) | 2nd threshold < R | Emit light of basic color and first color repeatedly in a cyclic manner | Blinking |

Table 1 is a view showing the result obtained by executing the steps of the flowchart of Fig. 4. As can be seen from the table 1, in a case (1) where the engine speed is lower than the first threshold which is the rough indication of the shift-up operation of the transmission, the display configuration of the indicator needle member 22 becomes the basic display configuration, and the semi-transparent portion 22b emits the light of the basic color (white color). In this case, the display configuration control section 72 causes the lamp 8 to be OFF and the shift-up notification section 23 to be OFF.

In a case (2) where the engine speed has exceeded the first threshold and is lower than the second threshold, the display configuration of the indicator needle member 22 becomes the first display configuration, and the semi-transparent portion 22b emits the light of the first color (red color) to urge the rider to perform the shift-up operation of the transmission. Also, in this case, the display configuration control section 72 causes the lamp 8 to be ON to change the display configuration of the shift-up notification section 23 from OFF into ON. Note that the timing at which the lamp 8 is ON is synchronized with the timing at which the indicator needle member 22 emits the light of the red color. In other words, the change in the display configuration of the shift-up notification section 23 is synchronized with the change in the display configuration of the indicator needle member 22. In this way, the rider can recognize the timing of the shift-up operation of the transmission, by the change in the display configuration of the shift-up notification section 23, in addition to the change in the display configuration of the indicator needle member 22.

In a case (3) where the engine speed has exceeded the second threshold, the display configuration of the indicator needle member 22 becomes the second display configuration, and the semi-transparent portion 22b emits the light of the basic color (white color) and the first color (red color) repeatedly in the cyclic manner. If the engine speed is further increased after the rider was urged to perform the shift-up operation of the transmission by changing the display configuration of the indicator needle member 22 into the first display configuration, the display configuration of the indicator needle member 22 is changed from the first display configuration into the second display configuration. In this way, the rider's eyes are attracted to the indicator needle member 22, and the rider is strongly urged to perform the shift-up operation of the transmission. In this case, the display configuration control section 72 causes the lamp 8 to blink, and thus changes the display configuration of the shift-up notification section 23 from ON (most recent ON-state) to blinking, as in the change in the display configuration of the indicator needle member 22. Alternatively, in the case (3), the shift-up notification section 23 continues to be ON without changing the display configuration of the shift-up notification section 23 from ON to blinking.

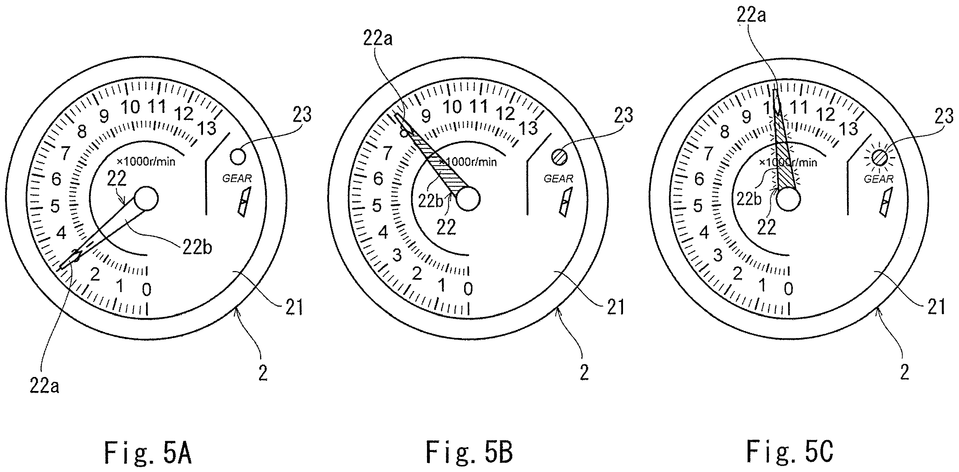

Figs. 5A to 5C show the changes in the display configuration of the indicator needle member 22, which take place in a period before the first threshold determiner section 71a determines that the engine speed has exceeded the first threshold until the second threshold determiner section 71b determines that the engine speed has exceeded the second threshold. Fig. 5A is a schematic plan view of the tachometer 2 in the state in which the engine speed is lower than the first threshold. As shown in Fig. 5A, the indicator needle member 22 points the engine speed which is lower than the first threshold (e.g., 8000r/min). In this state, as described above, the semi-transparent portion 22b of the indicator needle member 22 emits the light of the basic color (white color), and the shift-up notification section 23 is OFF.

Fig. 5B is a schematic plan view of the tachometer 2 in a state in which the engine speed has exceeded the first threshold and is lower than the second threshold. As shown in Fig. 5B, the indicator needle member 22 points the engine speed which has exceeded 8000r/min which is the first threshold. In this state, as described above, the semi-transparent portion 22b of the indicator needle member 22 emits the light of the first color (red color) as described above. The shift-up notification section 23 is ON to be synchronized with the display configuration of the indicator needle member 22, to notify the rider of the timing of the shift-up operation of the transmission. In the example of Fig. 5B, the semi-transparent portion 22b of the indicator needle member 22 is hatched to indicate that the display configuration of the indicator needle member 22 is changed in such a manner that the color of the light emitted from the indicator needle member 22 is changed from the white color into the red color. Likewise, the shift-up notification section 23 is hatched to indicate that the display configuration of the shift-up notification section 23 is changed from OFF to ON.

Fig. 5C is a schematic plan view of the tachometer 2 in a state in which the engine speed has exceeded the second threshold. As shown in Fig. 5C, the indicator needle member 22 points the engine speed which has exceeded 10000r/min which is the second threshold. In this state, as described above, the semi-transparent portion 22b of the indicator needle member 22b is blinking in such a manner that the semi-transparent portion 22b emits the light of the basic color (white color) and the first color (red color) repeatedly in the cyclic manner. Also, the shift-up notification section 23 is blinking in synchronization with the display configuration of the indicator needle member 22.

As shown in Figs. 5A to 5C, the tip end portion 22a of the indicator needle member 22 is painted in the fixed color (white color). Therefore, the display configuration of the tip end portion 22a is unchanged, irrespective of whether or not the engine speed has exceeded the first threshold or the second threshold. The indicator needle member 22 is angularly displaced in such a manner that only the display color of the semi-transparent portion 22b is changed when the engine speed has exceeded the first threshold or the second threshold. The indicator needle member 22 has a fixed size.

The display device 1 of the motorcycle configured as described above can obtain the advantages described below.

When the first threshold determiner section 71b determines that the engine speed has exceeded the first threshold, the meter ECU 7 changes the display configuration of the indicator needle member 22 of the rotational speed display unit (tachometer) 2, which should be fundamentally checked by the rider while accelerating or decelerating the motorcycle. Thereby, without shifting the rider's eyes directed to the indicator needle member 22, to other locations, namely, while keeping a state in which the rider's eyes are directed to the indicator needle member 22, the rider can recognize both of the change in the engine speed and the timing of the shift-up operation of the transmission, by seeing the rotational speed display unit (tachometer) 2 on which the rider checks the change in the engine speed by the position pointed by the indicator needle member 22. This allows the rider to instantly see and recognize the timing of the shift-up operation of the transmission. In particular, even when the engine speed is rapidly increased by a rapid acceleration operation or a rapid starting operation which is performed by the rider, in the motorcycle, the display configuration of the indicator needle member 22 which rotates in response to the increase in the engine speed is changed at the position indicating the engine speed which has exceeded the first threshold set as the rough indication of the timing of the shift-up operation of the transmission. Therefore, the rider can instantly recognize the timing of the shift-up operation of the transmission.

When the threshold determiner section 71 determines that the engine speed has exceeded the predetermined threshold, the display configuration of the indicator needle member 22, specifically, the display color (color of emitted light) is changed. Therefore, the rider can recognize that the engine speed has exceeded the threshold, by seeing the change in the display color of the indicator needle member 22.

Typically, the rider sees the indicator needle member 22 to check the engine speed, at a timing which is different from the timing at which the engine speed has reached the threshold. Therefore, the rider can see and recognize the change in the display color of the indicator needle member 22, while seeing the indicator needle member 22 to check the engine speed and without varying the location to which the rider's eyes are directed. Thus, the rider can instantly recognize that the engine speed has exceeded the threshold. In other words, the rider can become aware that the engine speed has exceeded the threshold without a time lag. This allows the operation (the shift-up operation of the transmission in the present embodiment) performed by the rider after the rider recognizes that the engine speed has reached the threshold, to take place earlier.

Since the location to which the rider's eyes are directed in the dial plate section 21 is not so varied, a time for which the rider's eyes are directed to locations different from the dial plate section 21 can be increased. For example, a time for which the rider's eyes are directed to locations (forward region in the traveling direction of the motorcycle, backward region in the traveling direction through side mirrors), which are in the vicinity of the vehicle body of the motorcycle, can be increased.

The rider directs the eyes relatively frequently to the indicator needle member 22 to check the engine speed. For this reason, the rider can easily recognize that the engine speed has reached the threshold, compared to a case where a shift-up command lamp disposed at a position different from that of the indicator needle member 22 indicates the change in the engine speed. For example, the rider frequently checks the engine speed during traveling of the motorcycle, and hence frequently sees the indicator needle member 22. Therefore, the rider can easily recognize the change in the engine speed, which is indicated by the change in the display color of the indicator needle member 22, compared to a case where the rider intentionally sees the shift-up command lamp disposed at the position different from that of the indicator needle member 22.

For example, in a case where the rider repeats driving of the motorcycle and thereby gets used to the display device 1, the rider can easily recognize the change in the engine speed merely by quickly glancing the angular position of the indicator needle member 22, without carefully seeing the scale marking 21a pointed by the indicator needle member 22. Since the display configuration of the indicator needle member 22, which tends to be quickly glanced by the rider, is changed, the rider can quickly recognize the change in the engine speed.

The tachometer 2 which displays the engine speed is sometimes placed in the display device 1 at a position which is noticed by the rider so that the rider can easily see the tachometer 2. For example, in the present embodiment, the tachometer 2 is placed at a position which is close to the center of the display device 1. Or, the tachometer 2 has an occupation area larger than those of other display units in the display device 1. The indicator needle member 22 of the tachometer 2 which can be seen more easily than other display units are and has a size greater than those of other display units, displays that the engine speed has reached the threshold. Therefore, the rider can easily see the change in the engine speed. Even in a case where the rider faces the front in the traveling direction, in a state in which the indicator needle member 22 is recognized in an outer region within the rider's view, the display configuration of the indicator needle member 22 formed in a relatively great region is changed. For this reason, if the indicator needle member 22 looks blurred, the rider can recognize that the engine speed has reached the threshold, which is more convenient to the user.

The indicator needle member 22 is configured to be movable with respect to the dial plate section 21 according to the engine speed, and the display configuration of this movable portion (semi-transparent portion 22b) is changed. Therefore, the rider can more easily see and recognize the change in the engine speed more easily, compared to a case where the display configuration of the fixed portion is changed. Further, irrespective of the change in the engine speed, the size of the display region of the indicator needle member 22 is unchanged. Therefore, a contrast intensity between the display color of the indicator needle member 22 and the background color of the dial plate section 21 can be made high. Thus, the rider can easily see and recognize the change in the engine speed.

The display region of the indicator needle member 22 is limited to a portion of the display region of the dial plate section 21. In this way, a change in the display configuration of a great portion of the display region of the indicator needle member 22 of the dial plate section 21 does not take place. This makes it possible to prevent a situation in which it is difficult for the rider to see other display regions of the dial plate section 21, while allowing the rider to easily see the indicator needle member 22.

Preferably, the display color of the indicator needle member 22 is different in tone or brightness from the background color of the dial plate section 21, and provides a contrast with the background color, as in the present embodiment. Further, for both of the display configuration of the indicator needle member 22 which occurs before the engine speed exceeds the threshold, and the display configuration of the indicator needle member 22 which occurs after the engine speed has exceeded the threshold, the display color of the indicator needle member 22 is preferably different in tone or brightness from the background color of the dial plate section 21, and provides a contrast with the background color. This makes it possible for the rider to more easily see the indicator needle member 22.

The display device 1 notifies the rider of other information (the timing of the shift-up operation of the transmission, in the present embodiment) different from the engine speed, by the change in the display configuration of the indicator needle member 22, in the limited display region. In this way, the limited display region can be efficiently utilized, compared to a case where an information notification lamp exclusively used to display other information is provided in the display device 1. Since the information notification lamp for the shift-up operation of the transmission is omitted, then a different information notification lamp can be placed, or the region in which the information different from the shift-up operation of the transmission is displayed can be increased.

The display configuration of the indicator needle member 22 is changed in such a manner that the display color of the semi-transparent portion 22b is changed from the basic color (white color) into the first color (red color), when the engine speed has exceeded the first threshold. In this way, the display color of the semi-transparent portion 22b is changed according to the engine speed, independently of the angular position of the indicator needle member 22. Therefore, the rider can recognize the change in the angular position of the indicator needle member 22 and the change in the display color of the indicator needle member 22, when the rider checks the display device 1. This allows the rider to easily recognize the change in the engine speed. Since the display color of the indicator needle member 22 is changed when the engine speed has exceeded the preset engine speed (threshold), the rider can easily know the engine speed (threshold).

The indicator needle member 22 includes the semi-transparent portion 22b which emits the light of the white color, when the engine speed is lower than the first threshold. This can improve the external appearance of the indicator needle member 22 using the indicator needle member light source 4, compared to an indicator needle member which is entirely non-transparent. The display color of the semi-transparent portion 22b of the indicator needle member 22 is the same as the color of the light emitted by the ON of the indicator needle member light source 4. Therefore, when the engine speed has exceeded the first threshold, the display color of the indicator needle member 22 is noticeably changed, and the rider can easily recognize the change in the engine speed (timing of the shift-up operation).

Further, the indicator needle member 22 includes the semi-transparent portion 22b and the non-transparent portion (tip end portion) 22a. This can make the change in the display color from the basic color (white color) into the first color (red color) noticeable to the rider, when the engine speed has exceeded the first threshold. Also, the rider can easily recognize the engine speed in the state in which the semi-transparent portion 22b is emitting the light of the basic color. Specifically, in the state in which the semi-transparent portion 22b is emitting the light of the basic color in a bright environment surrounding the motorcycle 1, the rider can easily recognize the engine speed, because the tip end portion 22a which points the scale marking 21a is non-transparent.

Since the particular portion of the indicator needle member 22, namely, the tip end portion 22a is painted in the fixed color (white color), the rider can easily recognize the angular position of the indicator needle member 22. Since the tip end portion 22a is painted in the fixed color, and hence the indicator needle member 22 has a portion whose color is unchanged, irrespective of the change in the engine speed, the rider can easily see the scale marking 21 of the dial plate section 21, and recognize the engine speed.

Since the portion of the fixed color of the indicator needle member 22 is the tip end portion 22a which is located radially outward relative to the rotary shaft 30 which rotates the indicator needle member 22 and close to the numbers 21b of the dial plate section 21, the rider can more easily recognize the engine speed.

The indicator needle member 22 includes the portion which is semi-transparent even in the state in which the indicator needle member light source 4 is emitting the light. The degree of transparency of the indicator needle member 22 is higher, when the indicator needle member light source 4 is OFF than when the indicator needle member light source 4 is ON. This can improve the design of the indicator needle member 22.

The basic color of the indicator needle member 22 which is displayed before the first threshold determiner section 71a determines that the engine speed exceeds the first threshold is the same as the color (white color) of the non-high rotational speed range R1 of the engine speed of the dial plate section 21. Therefore, the rider does not feel uncomfortable about the change in the color. On the other hand, when the first threshold determiner section 71a determines that the engine speed has exceeded the first threshold, the display color of the indicator needle member 22 is changed from the white color into the red color, and this red color is the same as the color (red color) of the high rotational speed range R2 of the engine speed of the dial plate section 21. Therefore, the rider does not feel uncomfortable about the change in the color and can easily recognize the change in the engine speed.

The first threshold of the engine speed, which is the rough indication of the shift-up operation of the transmission, can be chosen and set by the rider. Therefore, the first threshold of the engine speed can be set according to the rider's preference, and the display device 1 becomes more convenient to the rider.

In the case where the engine speed is further increased even after the rider was urged to perform the shift-up operation of the transmission by changing the display configuration of the indicator needle member 22 into the first display configuration, when the first threshold determiner section 71b determined that the engine speed exceeded the first threshold, the display configuration (e.g., display color) of the indicator needle member 22 is changed in the cyclic manner over time. This makes it easier for the rider to recognize the timing of the shift-up operation of the transmission, compared to a case where the display configuration (e.g., display color) of the indicator needle member 22 is unchanged over time.

In the present embodiment, when the second threshold determiner section 71b determines that the engine speed has exceeded the second threshold, the display configuration control section 72 alternately turns ON the white color LED 41 and the red color LED 42 so that the indicator needle member 22 repeatedly emits the light of the basic color (white color) and the first color (red color) in the cyclic manner. With this control, the display configuration of the the indicator needle member 22 is changed in a stepwise manner without increasing the number of the indicator needle member light sources 4. Therefore, the rider's eyes are more attracted to the indicator needle member 22, and the rider can more easily recognize the timing of the shift-up operation of the transmission.

Since the change in the display configuration of the indicator needle member 22 is synchronized with the change in the display configuration of the shift-up notification section 23, the display device 1 includes the notification section which notifies the rider of the timing of the shift-up operation of the transmission, independently of the indicator needle member 22. Even in a case where it is difficult for the rider to recognize the change in the engine speed by the change in the display configuration of the indicator needle member 22, depending on the brightness of the environment surrounding the motorcycle, the rider can easily recognize the change in the engine speed, by checking the display configuration of the shift-up notification section 23, which is different from the indicator needle member 22.

Since the brightness of the shift-up notification section 23 is different from the brightness of each of the indicator needle member light sources 4, the rider can easily recognize the timing of the shift-up operation of the transmission, by the change in the display configuration of the shift-up notification section 23, even when the change in the display configuration of the indicator needle member 22 is less in the bright environment surrounding the motorcycle.

Since the indicator needle member 22 has a great area, the rider may be bothered by glaring light of the indicator needle member 22 in some cases, depending on the amount of the light emitted by the ON of the indicator needle member light source 4. In view of this, by making the area of the shift-up notification section 23 smaller than that of the indicator needle member 22, the light emitted from the shift-up notification section 23 by the ON of the lamp 8 is not so bright to the rider.

It is known that a rotational speed display unit displays non-character information to indicate the engine speed, without using a dial plate section and an indicator needle member. In an exemplary known configuration, light emitting elements aligned in the rightward and leftward direction are sequentially turned ON from the left, in association with an increase in the engine speed so that the rider can recognize the change in the engine speed by a change in the number of the light emitting elements which emit the light. However, in this configuration, with an increase in the engine speed, the number of the light emitting elements which emit the light increases. For this reason, the rider may be bothered by glaring light when the rider checks the rotational speed display unit. In contrast, in the present embodiment, only the display color of the semi-transparent portion 22b of the indicator needle member 22 is changed to allow the rider to recognize the change in the engine speed, and the indicator needle member 22 of a fixed size is angularly displaced. Therefore, in the present embodiment, the rider is less likely to be bothered by glaring light, compared to the above-described configuration in which the change in the engine speed is displayed using the non-character information.

The present invention is not limited to the above-described embodiment. The above-described configuration may be changed, added to or deleted from, within a scope of the spirit of the preset invention. Although in the above-described embodiment, the change in the display color of the indicator needle member 22 is exemplarily described as the change in the display configuration of the indicator needle member 22, corresponding to the engine speed, other configuration may be used so long as what the indicator needle member 22 looks like to the rider can be changed. For example, when the threshold determiner section 71 determines that the engine speed has exceeded the threshold, the indicator needle member 22 may blink, or the brightness of the indicator needle member 22 may be changed. Further, the size of the indicator needle member 22 (e.g., length from the base portion to the tip end portion 22a) may be changed, or the color of the indicator needle member 22 may be gradationally changed in the direction from the base portion toward the tip end portion 22a, according to the engine speed.

The configuration in which the indicator needle member 22 is movable with respect to the dial plate section 21, and the configuration in which the indicator needle member 22 emits the light by the ON of each of the indicator needle member light sources 4, which are described above with reference to Fig. 2, are merely exemplary. For example, the indicator needle member 22 may be rotated by using a driving unit different from the electric motor. Although in the above-described embodiment, the indicator needle member 22 emits the light via the light guiding plate 5, the indicator needle member 22 may directly emit the light by the ON of each of the indicator needle member light sources 4 without using the light guiding plate 5. Although in the above-described embodiment, the indicator needle member 22 is constituted by the rod-like member which is a physical member, the indicator needle member 22 may be displayed by image processing performed in a liquid crystal display device. Although in the above-described embodiment, the display configuration control section 72 changes the display configuration of the indicator needle member 22 into the second display configuration when the second threshold determiner section 71b determines that the engine speed has exceeded the second threshold, the present invention is not limited to this. For example, if it is determined that the gear position of the transmission which is detected by a gear position sensor after the first threshold determiner section 71a determined that the engine speed exceeded the first threshold is not changed over a predetermined time, the meter ECU 7 may determine that the rider has not performed the shift-up operation of the transmission yet and change the display configuration of the indicator needle member 22 into the second display configuration.

Although in the above-described embodiment, the white color LED (first light source) 41 is turned ON and the semi-transparent portion 22b of the indicator needle member 22 emits the light of the white color, when the first threshold determiner section 71a determines that the engine speed is lower than the first threshold, the indicator needle member 22 may not emit the light before the engine speed exceeds the first threshold. For example, when the first threshold determiner section 71a determines that the engine speed is lower than the first threshold, the display configuration control section 72 may not turn ON the indicator needle member light source 4, and the display color of the indicator needle member 22 may be the color of the light guiding plate 5. Further, the remaining portion 22b which is different from the tip end portion 22a, of the indicator needle member 22 may be transparent, instead of semi-transparent.

Although in the above-described embodiment, the white color LED is used as the first light source 41 and the red color LED is used as the second light source 42, the first light source 41 and the second light source 42 may be LEDs which emit the light of other colors. Although in the above-described embodiment, the second display configuration of the indicator needle member 22 is such that the indicator needle member 22 emits the light of the basic color and the light of the first color repeatedly in the cyclic manner, the indicator needle member 22 emits light of a second color which is different from the basic color and the first color. Although in the above-described embodiment, the meter ECU 7 includes the threshold determiner section 71 and the display configuration control section 72, the threshold determiner section 71 may be provided as a threshold determiner unit, separately from the meter ECU 7. Although in the above-described embodiment, the display configuration of the indicator needle member 22 is changed according to the engine speed so that the rider can recognize the timing of the shift-up operation of the transmission, the rider may recognize the change in the engine speed for purposes which are different from the recognition of the timing of the shift-up operation. Although in the above-described embodiment, the shift-up notification section 23 is provided on the rotational display unit 2, the shift-up notification section 23 may be omitted from the rotational speed display unit 2.

Further, the display device 1 may be provided with other gauges each including an indicator needle member and indicating the state of the motorcycle, which are different from the tachometer which displays the engine speed. For example, the gauges may include a speed meter which displays a vehicle speed, a fuel meter which displays a fuel amount, and a temperature meter which displays the temperature of the cooling water, etc.. In the case of the speed meter, the display configuration of the indicator needle member may be changed over time according to the vehicle speed so that the rider can instantly recognize the change in the vehicle speed, independently of the angular position of the indicator needle member moving. In a case where the display device 1 is provided with other gauges different from the tachometer, the vehicle is not limited to the above-described motorcycle incorporating the manual transmission, and may be the motorcycle incorporating an automatic transmission. It is sufficient that the vehicle includes a motor which changes torque with its rotational speed. The motorcycle may be an electric motorcycle incorporating an electric motor as the motor. Moreover, the vehicle is not limited to the motorcycle, and may be a three-wheeled or four-wheeled vehicle, ship such as a personal watercraft, etc..

Numerous improvements and alternative embodiment of the invention will be apparent to those skilled in the art in view of the foregoing description. Accordingly, the description is to be construed as illustrative only, and is provided for the purpose of teaching those skilled in the art the best mode of carrying out the invention.

## Claims

1. A display device (1) of a vehicle, the display device (1) comprising:
a rotational speed display unit (2) including a dial plate section (21) including scale markings (21a) to indicate a rotational speed of a motor, and an indicator needle member (22) which is movable with respect to the dial plate section (21) according to the rotational speed of the motor, and points one of the scale markings (21 a);
a threshold determiner unit (71) which determines whether or not the rotational speed of the motor has exceeded a predetermined threshold; and
a display configuration control unit (72) which changes a display configuration of the indicator needle member (22),
wherein the display configuration control unit (72) urges a rider to perform a shift-up operation of a transmission by changing a display configuration of the indicator needle member (22), when the threshold determiner unit (71) determines that the rotational speed has exceeded the predetermined threshold,
**characterized in that**
the rotational speed display unit (2) includes a light source (4) provided on a back side of the dial plate section (21),
the indicator needle member (22) includes a tip end portion (22a) which points the scale marking (21a), and a display configuration of the tip end portion (22a) is unchanged when the threshold determiner unit (71) determines that the rotational speed has exceeded the predetermined threshold,
the tip end portion (22a) has a non-transparent color, and
a remaining portion (22b) of the indicator needle member (22) emits light by the light source (4), the remaining portion (22b) being different from the tip end portion (22a).

2. The display device (1) of the vehicle according to claim 1,
wherein the rotational speed display unit (2) further includes a gear position display section (24) which displays a gear position of a transmission of the vehicle.

3. The display device (1) of the vehicle according to claim 1 or 2,
wherein the threshold includes a first threshold and a second threshold set to a value which is greater than a value of the first threshold,
wherein the display configuration control unit (72) changes the display color of the indicator needle member (22), when the threshold determiner unit (71) determines that the rotational speed has exceeded the first threshold, and
wherein the display configuration control unit (72) changes the display configuration of the indicator needle member (22) from ON-state to blinking-state, when the threshold determiner unit (71) determines that the rotational speed has exceeded the second threshold.

4. The display device (1) of the vehicle according to claim 3,
wherein the first display configuration is such that a first color is displayed, the first color being different from a basic color displayed before the threshold determiner unit (71) determines that the engine speed has exceeded the first threshold, and
wherein the second display configuration is such that the basic color and the first color are repeatedly displayed in a cyclic manner.

5. The display device (1) of the vehicle according to claim 1 to 4,
wherein the threshold is chosen and set.

6. The display device (1) of the vehicle according to claim 1 to 5,
wherein the rotational speed display unit (2) includes a shift-up notification section (23) which notifies a rider of a timing of the shift-up operation of the transmission, independently of the indicator needle member (22),
wherein the shift-up notification section (23) is placed to be closer to a gear position display section (24), which displays a gear position of a transmission of the vehicle, than the scale markings (21a), and
wherein the display configuration control unit (72) changes a display configuration of the shift-up notification section (23) in synchronization with a change in the display configuration of the indicator needle member (22), when the threshold determiner unit (71) determines that the rotational speed has exceeded the threshold.

7. The display device (1) of the vehicle according to claim 1,
wherein the rotational speed display unit (2) includes a plurality of light sources (4) provided on a back side of the dial plate section (21),
the plurality of light sources (4) include a first light source (41) which emits light with a first color, and a second light source (42) which emits light with a second color different from the first color, and
wherein an amount of the light emitted from the second light source (42) is set to be greater than that of the first light source (41).

8. The display device (1) of the vehicle according to claim 1,
wherein the rotational speed display unit (2) includes a plurality of light sources (4) provided on a back side of the dial plate section (21),
wherein the indicator needle member (22) includes a portion which is semi-transparent even in the state in which the light source (4) is emitting light.

## Patentansprüche

1. Anzeigevorrichtung (1) eines Fahrzeugs, wobei die Anzeigevorrichtung (1) umfasst:
eine Drehzahlanzeigeeinheit (2) mit einer Ziffernblatteinheit (21), welche Skalenmarkierungen (21a) zum Anzeigen einer Drehzahl eines Motors aufweist, und einem Anzeigenadelelement (22), das in Bezug auf die Ziffernblatteinheit (21) entsprechend der Drehzahl des Motors beweglich ist und auf eine der Skalenmarkierungen (21a) zeigt;
eine Schwellenwertermittlungseinheit (71), die ermittelt, ob die Drehzahl des Motors einen vorbestimmten Schwellenwert überschritten hat; und
eine Anzeigekonfigurationssteuereinheit (72), die eine Anzeigekonfiguration des Anzeigenadelelements (22) ändert,
wobei die Anzeigekonfigurationssteuereinheit (72) einen Fahrer anhält, einen Hochschaltvorgang eines Getriebes durch Ändern einer Anzeigekonfiguration des Anzeigenadelelements (22) durchzuführen, wenn die Schwellenwertermittlungseinheit (71) ermittelt, dass die Drehzahl den vorbestimmten Schwellenwert überschritten hat,
**dadurch gekennzeichnet, dass**
die Drehzahlanzeigeeinheit (2) eine auf einer Rückseite der Ziffernblatteinheit (21) angebrachte Lichtquelle (4) aufweist,
das Anzeigenadelelement (22) ein Spitzenendteil (22a) aufweist, das auf die Skalenmarkierung (21a) zeigt, und eine Anzeigekonfiguration des Spitzenendteils (22a) unverändert ist, wenn die Schwellenwertermittlungseinheit (71) ermittelt, dass die Drehzahl den vorbestimmten Schwellenwert überschritten hat,
das Spitzenendteil (22a) eine nicht transparente Farbe hat, und
ein verbleibender Teil (22b) des Anzeigenadelelements (22) Licht durch die Lichtquelle (4) emittiert, wobei der verbleibende Teil (22b) sich von dem Spitzenendteil (22a) unterscheidet.

2. Anzeigevorrichtung (1) des Fahrzeugs nach Anspruch 1,
wobei die Drehzahlanzeigeeinheit (2) ferner eine Gangpositionsanzeigeeinheit (24) aufweist, die eine Gangstellung eines Getriebes des Fahrzeugs anzeigt.

3. Anzeigevorrichtung (1) des Fahrzeugs nach einem der Ansprüche 1 oder 2,
wobei der Schwellenwert einen ersten Schwellenwert und einen zweiten Schwellenwert, der auf einen Wert, der größer ist als ein Wert des ersten Schwellenwertes, eingestellt ist, aufweist,
wobei die Anzeigekonfigurationssteuereinheit (72) die Anzeigefarbe des Anzeigenadelelements (22) ändert, wenn die Schwellenwertermittlungseinheit (71) ermittelt, dass die Drehzahl den ersten Schwellenwert überschritten hat, und
wobei die Anzeigekonfigurationssteuereinheit (72) die Anzeigekonfiguration des Anzeigenadelelements (22) vom ON-Zustand in einen blinkenden Zustand ändert, wenn die Schwellenwertermittlungseinheit (71) ermittelt, dass die Drehzahl den zweiten Schwellenwert überschritten hat.

4. Anzeigevorrichtung (1) des Fahrzeugs nach Anspruch 3,
wobei die erste Anzeigekonfiguration derart ist, dass eine erste Farbe angezeigt wird, wobei sich die erste Farbe von einer Grundfarbe unterscheidet, die angezeigt wird, bevor die Schwellenwertermittlungseinheit (71) ermittelt, dass die Motordrehzahl den ersten Schwellenwert überschritten hat, und
wobei die zweite Anzeigekonfiguration so ist, dass die Grundfarbe und die erste Farbe zyklisch wiederholt angezeigt werden.

5. Anzeigevorrichtung (1) des Fahrzeugs nach einem der Ansprüche 1 bis 4,
wobei der Schwellenwert ausgewählt und eingestellt wird.

6. Anzeigevorrichtung (1) des Fahrzeugs nach einem der Ansprüche 1 bis 5,
wobei die Drehzahlanzeigeeinheit (2) eine Hochschaltmeldeeinheit (23) aufweist, die einen Fahrer unabhängig von dem Anzeigenadelelement (22) über ein Timing des Hochschaltvorgangs des Getriebes informiert,
wobei die Hochschaltmeldeeinheit (23) angeordnet ist, um näher an einer Gangpositionsanzeigeeinheit (24), die eine Gangstellung eines Getriebes des Fahrzeugs anzeigt, als die Skalenmarkierungen (21a) zu sein, und
wobei die Anzeigekonfigurationssteuereinheit (72) eine Anzeigekonfiguration der Hochschaltmeldeeinheit (23) synchron zu einer Änderung in der Anzeigekonfiguration des Anzeigenadelglieds (22) ändert, wenn die Schwellenwertermittlungseinheit (71) ermittelt, dass die Drehzahl den Schwellenwert überschritten hat.

7. Anzeigevorrichtung (1) des Fahrzeugs nach Anspruch 1,
wobei die Drehzahlanzeigeeinheit (2) eine Mehrzahl von Lichtquellen (4) aufweist, die auf einer Rückseite der Ziffernblatteinheit (21) vorgesehen sind,
wobei die Mehrzahl von Lichtquellen (4) eine erste Lichtquelle (41), welche Licht mit einer ersten Farbe emittiert, und eine zweite Lichtquelle (42), welche Licht mit einer zweiten Farbe, die sich von der ersten Farbe unterscheidet, emittiert, aufweisen, und
wobei eine Menge des von der zweiten Lichtquelle (42) emittierten Lichts eingestellt ist, sodass sie größer als die von der ersten Lichtquelle (41) ist.

8. Anzeigevorrichtung (1) des Fahrzeugs nach Anspruch 1,
wobei die Drehzahlanzeigeeinheit (2) eine Mehrzahl von Lichtquellen (4) aufweist, die auf der Rückseite der Ziffernblatteinheit (21) vorgesehen sind,
wobei das Anzeigenadelelement (22) einen Abschnitt aufweist, der selbst in den Zustand, in dem die Lichtquelle (4) Licht emittiert, halbtransparent ist.

## Revendications

1. Dispositif d'affichage (1) d'un véhicule, le dispositif d'affichage (1) comprenant :
une unité d'affichage de vitesse de rotation (2) comprenant une section de cadran (21) comprenant des graduations (21a) pour indiquer une vitesse de rotation d'un moteur, et un élément formant aiguille d'indicateur (22) qui est mobile par rapport à la section de cadran (21) selon la vitesse de rotation du moteur et pointe sur l'une des graduations (21a) ;
une unité de détermination de seuil (71) qui détermine si la vitesse de rotation du moteur a dépassé un seuil prédéterminé ou non ; et
une unité de commande de configuration d'affichage (72) qui modifie une configuration d'affichage de l'élément formant aiguille d'indicateur (22),
dans lequel l'unité de commande de configuration d'affichage (72) incite un conducteur à passer à une vitesse supérieure d'une transmission en modifiant une configuration d'affichage de l'élément formant aiguille d'indicateur (22) lorsque l'unité de détermination de seuil (71) détermine que la vitesse de rotation a dépassé le seuil prédéterminé,
**caractérisé en ce que**
l'unité d'affichage de vitesse de rotation (2) comprend une source de lumière (4) prévue sur une face arrière de la section de cadran (21),
l'élément formant aiguille d'indicateur (22) comprend une partie d'extrémité de pointe (22a) qui pointe sur la graduation (21a), et une configuration d'affichage de la partie d'extrémité de pointe (22a) n'est pas modifiée lorsque l'unité de détermination de seuil (71) détermine que la vitesse de rotation a dépassé le seuil prédéterminé,
la partie d'extrémité de pointe (22a) présente une couleur non transparente, et
une partie restante (22b) de l'élément formant aiguille d'indicateur (22) émet de la lumière par la source de lumière (4), la partie restante (22b) étant différente de la partie d'extrémité de pointe (22a).

2. Dispositif d'affichage (1) du véhicule selon la revendication 1,
dans lequel l'unité d'affichage de vitesse de rotation (2) comprend en outre une section d'affichage de position de vitesse (24) qui affiche une position de vitesse d'une transmission du véhicule.

3. Dispositif d'affichage (1) du véhicule selon la revendication 1 ou 2,
dans lequel le seuil comprend un premier seuil et un deuxième seuil fixé à une valeur qui est supérieure à une valeur du premier seuil,
dans lequel l'unité de commande de configuration d'affichage (72) modifie la couleur d'affichage de l'élément formant aiguille d'indicateur (22) lorsque l'unité de détermination de seuil (71) détermine que la vitesse de rotation a dépassé le premier seuil, et
dans lequel l'unité de commande de configuration d'affichage (72) modifie la configuration d'affichage de l'élément formant aiguille d'indicateur (22) d'un état MARCHE à un état clignotant lorsque l'unité de détermination de seuil (71) détermine que la vitesse de rotation a dépassé le deuxième seuil.

4. Dispositif d'affichage (1) du véhicule selon la revendication 3,
dans lequel la première configuration d'affichage est telle qu'une première couleur est affichée, la première couleur étant différente d'une couleur de base affichée avant que l'unité de détermination de seuil (71) ne détermine que la vitesse du moteur a dépassé le premier seuil, et
dans lequel la deuxième configuration d'affichage est telle que la couleur de base et la première couleur sont affichées de manière cyclique à plusieurs reprises.

5. Dispositif d'affichage (1) du véhicule selon les revendications 1 à 4,
dans lequel le seuil est choisi et fixé.

6. Dispositif d'affichage (1) du véhicule selon les revendications 1 à 5,
dans lequel l'unité d'affichage de vitesse de rotation (2) comprend une section de notification de passage à une vitesse supérieure (23) qui notifie un conducteur d'une synchronisation du passage à une vitesse supérieure de la transmission, indépendamment de l'élément formant aiguille d'indicateur (22),
dans lequel la section de notification de passage à une vitesse supérieure (23) est placée de manière à être plus proche d'une section d'affichage de position de vitesse (24), qui affiche une position de vitesse d'une transmission du véhicule, que les graduations (21a), et
dans lequel l'unité de commande de configuration d'affichage (72) modifie une configuration d'affichage de la section de notification de passage à une vitesse supérieure (23) en synchronisation avec une modification de la configuration d'affichage de l'élément formant aiguille d'indicateur (22) lorsque l'unité de détermination de seuil (71) détermine que la vitesse de rotation a dépassé le seuil.

7. Dispositif d'affichage (1) du véhicule selon la revendication 1,
dans lequel l'unité d'affichage de vitesse de rotation (2) comprend une pluralité de sources de lumière (4) prévues sur une face arrière de la section de cadran (21),
la pluralité de sources de lumière (4) comprend une première source de lumière (41) qui émet de la lumière d'une première couleur et une deuxième source de lumière (42) qui émet de la lumière d'une deuxième couleur différente de la première couleur, et
dans lequel une quantité de la lumière émise depuis la deuxième source de lumière (42) est réglée pour être supérieure à celle de la première source de lumière (41).

8. Dispositif d'affichage (1) du véhicule selon la revendication 1,
dans lequel l'unité d'affichage de vitesse de rotation (2) comprend une pluralité de sources de lumière (4) prévues sur une face arrière de la section de cadran (21),
dans lequel l'élément formant aiguille d'indicateur (22) comprend une partie qui est semi-transparente même à l'état où la source de lumière (4) émet de la lumière.
